# EUROPEAN PATENT SPECIFICATION

(11) **EP 4 357 615 B1**
(45) Date of publication and mention of the grant of the patent: **03.09.2025**
(21) Application number: 22202200.6
(22) Date of filing: 18.10.2022
(51) Int. Cl.: F03D 80/70, F16C 33/76, F16J 15/00, F16J 15/3288, F16J 15/34

(54) **LUBRICANT RETENTION SYSTEMS**
SCHMIERMITTELRÜCKHALTESYSTEME
SYSTÈMES DE RÉTENTION DE LUBRIFIANT

(43) Date of publication of application: 24.04.2024
(73) Proprietor: LM Wind Power A/S, 6000 Kolding (DK)
(72) Inventor: KJER ELKJÆR, Christian, DK-6000 KOLDING (DK); EL-NAAMAN, Salim, DK-6000 KOLDING (DK); BAKKUM, Maurits, 1703 DH HEERHUGOWAARD (NL); NØRGAARD, Lars Irgens, DK-6000 KOLDING (DK); ØSTERGAARD PEDERSEN, Birgit, DK-6000 KOLDING (DK)
(74) Representative: ZBM Patents - Zea, Barlocci & Markvardsen

(56) References cited:
- WO-A1-2022/130331
- US-A1- 2010 135 607

## Description

The present disclosure relates to lubricant retention systems for pitch bearings of wind turbines, blade root portions having these lubricant retention systems and methods for mounting lubrication retention systems in wind turbine blades.

### BACKGROUND

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower.

An auxiliary system generally provided on wind turbines is the pitch system. Pitch systems are employed for adapting the position of a wind turbine blade to varying wind conditions. A pitch system normally comprises a pitch bearing comprising an outer ring, an inner ring and, between these two rings, one or more rows of rolling elements which allow both rings to rotate relative to each other. Lubricant, e.g. oil or grease, is provided between the rings to prevent excessive wear of the rings and of the rolling elements. The rolling elements, e.g. balls or rollers, may be arranged between an inner race of the inner ring and an outer race of the outer ring for reducing the friction between these rings.

Depending on the type of rolling elements, the pitch bearing may be for example a ball bearing or a roller bearing. The rolling elements of ball bearings are balls that rotate between the inner and outer races. In roller bearings, the rolling elements arranged between the races have a generally cylindrical or conical shape and are generally called rollers.

Alternatively, plain bearings or sliding bearings may also be used. In these bearings, a lubricant film may be provided between planar surfaces of the inner and the outer ring to reduce friction.

A wind turbine blade may be attached either to the inner ring or to the outer ring, whereas the hub is connected to the other of the (inner or outer) rings. A blade may perform a relative rotational movement with respect to the hub when a pitch system is actuated. The bearing inner ring may therefore perform a rotational movement with respect to the bearing outer ring.

Pitch bearings may comprise a bearing sealing element to reduce lubricant leaks from the pitch bearing. For example, a bearing sealing element may be provided to close a bearing gap formed between the inner ring and the outer ring. Lubricant may generally spill out through the bearing gap between the rings.

Furthermore, a groove may be machined in one or in both rings to accumulate lubricant. This groove widens the bearing gap between the inner and the outer rings so as to increase the lubricant stored. The bearing sealing element may also cover the groove to reduce lubricant spillage. The bearing sealing elements are generally known as primary seals.

However, bearing sealing elements do not completely avoid lubricant leaks from the pitch bearings. Lubricant leaks may thus end on the ground which may generate a risk of potential environmental pollution.

Furthermore, the volume of the groove to accumulate lubricant is relatively small and fills up quickly. Maintenance operations to empty the lubricant out of the cavity thus have to be frequently performed.

Brush seals having a bundle of bristles may be used to absorb grease leaking from the pitch bearing. These brush seals are generally arranged relatively close to the bearing gap between the outer and the inner ring of the pitch bearing. However, the bristles may get saturated relatively quickly. The capacity to retain the grease of brush seals may decrease with time. Consequently, maintenance operations to clean these brush seals must be periodically performed. Cleaning and reuse of the brush seal may not be feasible in some cases and thus full replacement of the brush seal may be required. Cleaning the brush seals may commonly involve replacing the complete brush seal. Accordingly, these maintenance operations may be labor-intensive. In addition, brush seals may be difficult to install in existing wind turbine blades. Document US 2010/135607 A1 describes a seal arrangement for sealing a bearing component that includes brush seal having an annular brush body and a bundle of resiliently bendable bristles.

The present disclosure provides examples of systems and methods that at least partially resolve some of the aforementioned disadvantages.

### SUMMARY

In a first aspect, a lubricant retention system for a pitch bearing of a wind turbine is provided. An example of such a pitch bearing comprises a first bearing component to be coupled to a wind turbine blade and a second bearing component to be coupled to a rotor hub of a wind turbine. The first bearing component is to rotate with respect to the second bearing component.

The lubricant retention system comprises a base and a plurality of annular seal segments. The base is to be connected to a wind turbine blade. The base comprises a base outer surface to fit a surface of the wind turbine blade. The plurality of annular seal segments is to be connected to the base. The annular seal segments of the plurality of annular seal segments are to be connected to each other to form an annular seal assembly. In addition, the plurality of annular seal segments comprises a distal end portion. When the lubricant retention is mounted on the wind turbine blade, the distal end portion extends towards the second bearing component for defining a chamber for retaining lubricant from the pitch bearing. The plurality of annular seal segments further comprises a releasable annular seal segment to be releasably connected to another of the annular seal segments of the plurality of annular seal segments.

According to this aspect, retention of lubricant, e.g. oil and/or grease, leaking from the pitch bearing is improved. Therefore, the risk of lubricant leaking from the pitch bearing reaching the ground is reduced. Consequently, the risk of environmental pollution may be minimized. A bearing gap between the first bearing component and the second bearing component is enclosed by the lubricant retention system when the distal end portion of the plurality of annular seal segments extends towards the second bearing component of the pitch bearing. A sealing arrangement is thus formed between the distal end portion of the plurality of annular seal segments and the second bearing component. As a result, a cavity to accumulate lubricant leaks from the pitch bearing is formed. This cavity allows storing a volume of lubricant greater than in grooves machined in the bearing components or grease absorbed by bristles of seal brushes arranged to directly cover the bearing gap between the first bearing component and the second bearing component. The frequency of maintenance operations of emptying the cavity may thus be reduced.

Connecting the base of the lubricant retention system to the wind turbine blade allows installing the lubricant retention system in existing wind turbines in an easy manner. Attaching a lubricant retention system to the pitch bearing may be more complex since the available space of the pitch bearing for attaching the lubricant retention is more limited. Accordingly, the base of the lubricant retention system may be attached to the blade in a production plant, on the ground before lifting the blade or even in blades already connected to the rotor hub. The plurality of annular sealing segments may thus be coupled to the blade when the base is attached to the wind turbine blade.

In addition, the pitch bearing may suffer structural problems or may require a design change if a lubricant retention system is connected to the pitch bearing. For example, it may be necessary to machine holes on one bearing component to screw the lubricant retention system into this bearing component. This may adversely affect the structural behavior of the pitch bearing. The risk of creation and propagation of cracks on the pitch bearing may thus be increased.

As explained before, the plurality of annular sealing segments is connected to each other to form the annular seal assembly. The annular sealing segments are thus connected edge-to-edge to form a complete annular seal assembly. The plurality of annular sealing segments may be first positioned around the blade and then joined together. This simplifies the installation of the lubricant retention system. The size of these annular sealing segments is smaller than if the annular seal were made from a single piece. Instead of a single-piece annular seal, the plurality of annular sealing segments may be lifted with the existing lifting or hoisting equipment of the wind turbine. Logistics are thus also improved.

At least one of the annular seal segments is releasable. A releasable annular seal segment is an annular seal segment of the plurality of annular seal segments that may be attached and detached from the remaining annular seal segment or segments of the annular seal assembly in an easy manner. The releasable annular seal segment may thus be easily removed from the annular seal assembly. Inspection of the level of lubricant contained within the cavity formed by the annular seal assembly may thus be easily performed. Furthermore, the lubricant contained within this cavity may be extracted by an aperture caused when the releasably annular seal segment is removed. Therefore, maintenance and inspection operations may be simplified and optimized.

In a further aspect, a blade root portion of a wind turbine blade is provided. The blade root portion comprises a blade shell and a blade root attachment portion. The blade shell comprises an inner blade shell surface and an outer blade shell surface. The blade root attachment portion is configured to attach the blade root portion to a first bearing component of a pitch bearing. The blade root portion further comprises a lubricant retention system according to any of the examples herein disclosed. The base of the lubricant retention system is coupled to the blade shell and/or to the blade root attachment portion.

Similar to the first aspect, lubricant leaks from the pitch bearing may be retained with an easy-to-install system. Furthermore, inspection and maintenance operations of the lubricant retention system may be improved.

In further aspects, a wind turbine blade having the blade root portion with the lubricant retention system according to any of the examples herein disclosed is provided. A rotor having a rotor hub and one or more blades having the lubricant retention system according to any of the examples herein disclosed is also provided. Furthermore, a wind turbine having such a rotor is provided.

In a further aspect, a method for mounting a lubricant retention system for a pitch bearing of a wind turbine blade is provided. The pitch bearing comprises a first bearing component and a second bearing component, the first bearing component is to rotate with respect to the second bearing component.

The method comprises connecting a base of the lubricant retention system to a blade root portion of the wind turbine blade configured to be coupled to the first bearing component. In addition, the method comprises connecting a plurality of annular seal segments to the base in such a way that a distal end portion of the plurality of annular seal segments extends towards the second bearing component for defining a chamber for retaining lubricant from the pitch system. The method further comprises connecting the plurality of annular seal segments to each other to form an annular seal assembly, wherein connecting the plurality of annular seal segments comprises releasably connecting a releasable annular seal segment of the plurality of annular seal segments to the another of the annular seal segments of the plurality of annular seal segments.

In yet a further aspect, a method for performing maintenance operations in a wind turbine is provided. The method comprises removing a releasable annular seal segment from an annular seal assembly formed by a plurality of annular seal segments of a lubricant retention system for a pitch bearing. In addition, the method comprises inspecting a level of lubricant leaked from the pitch bearing retained in a chamber defined by the annular seal assembly.

Advantages derived from these aspects may be similar to those mentioned regarding the previous aspects.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 illustrates a simplified, internal view of a nacelle of a wind turbine according to one example;
Figure 3 shows a perspective view of a wind turbine blade according to one example;
Figure 4 shows a cross-sectional view of a lubricant retention system according to one example of the present disclosure mounted on a wind turbine blade;
Figure 5 is a zoomed-in view of the lubricant retention system of Figure 4;
Figure 6 shows a lubricant retention system according to one example of the present disclosure;
Figure 7A shows a cross-sectional view of a lubricant retention system according to one example of the present disclosure mounted on a wind turbine blade;
Figure 7B shows a distal end portion of the plurality of annular seal segments according to an example of the present disclosure;
Figure 7C shows a distal end portion of the plurality of annular seal segments according to an example of the present disclosure;
Figure 8 is an enlarged view of the connection of the base to the blade shell of Figure 7A;
Figure 9A schematically represents an annular seal assembly of a lubricant retention system according to an example of the present disclosure;
Figure 9B schematically represents an annular seal assembly of a lubricant retention system according to an example of the present disclosure;
Figure 10 schematically represents a bottom view of a portion of an annular seal assembly according to an example of the present disclosure;
Figure 11 is a block diagram of a method for mounting a lubricant retention system for a pitch bearing in a wind turbine blade according to an example of the present disclosure; and
Figure 12 is a block diagram of a method for performing maintenance operations in a wind turbine.

### DETAILED DESCRIPTION OF EXAMPLES

In these figures the same reference signs have been used to designate matching elements.

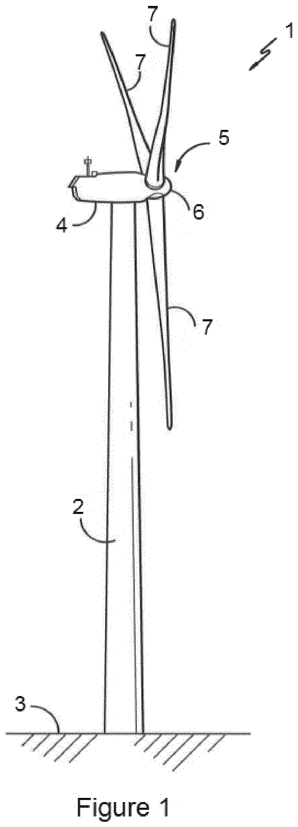

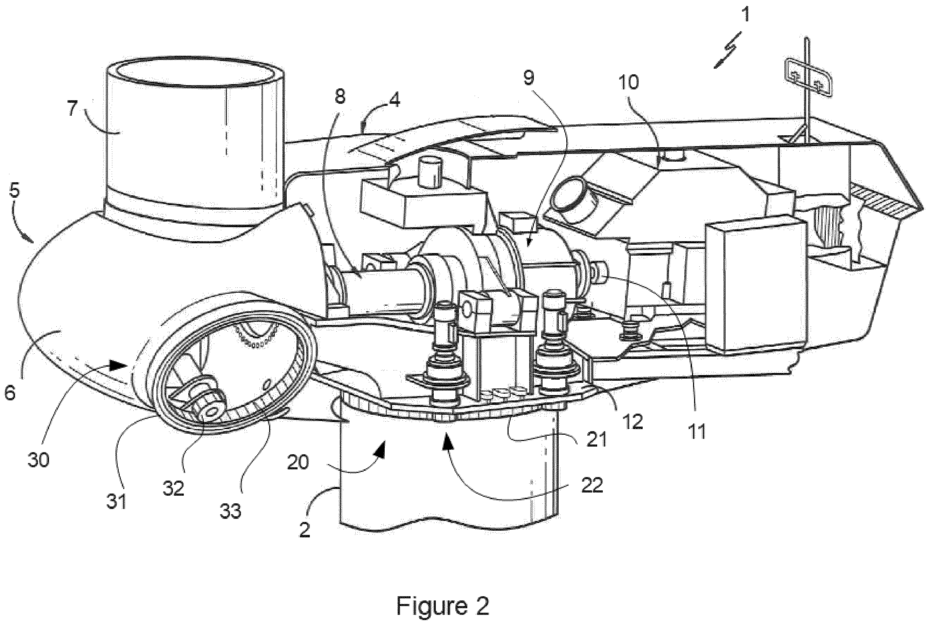

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative embodiment, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 (Figure 2) positioned within the nacelle 4 or forming part of the nacelle to permit electrical energy to be produced.

Figure 2 illustrates a simplified, internal view of one example of the nacelle 4 of the wind turbine 1 of the Figure 1. As shown, the electric generator 10 may be disposed within the nacelle 4. In general, the generator 10 may be coupled to the rotor 5 of the wind turbine 1 for generating electrical power from the rotational energy generated by the rotor 5. For example, the rotor 5 may include a main rotor shaft 8 coupled to the rotor hub 6 for rotation therewith. The generator 10 may then be coupled to the rotor shaft 8 such that the rotation of the rotor shaft 8 drives the generator 10. For instance, in this figure, the generator 10 includes a generator shaft 11 rotatably coupled to the rotor shaft 8 through a gearbox 9. In other examples, the generator may be directly coupled to the rotor hub or to the rotor shaft.

It should be appreciated that the rotor shaft 8, gearbox 9, and generator 10 may generally be supported within the nacelle 4 by a bedplate or a support frame 12 positioned atop the tower 2.

The nacelle 4 is rotatably coupled to the tower 2 through a yaw system 20. The yaw system comprises a yaw bearing (not visible in Figure 2) having two bearing components configured to rotate with respect to the other. The tower 2 is coupled to one of the bearing components and the bedplate or support frame 12 of the nacelle 4 is coupled to the other bearing component.

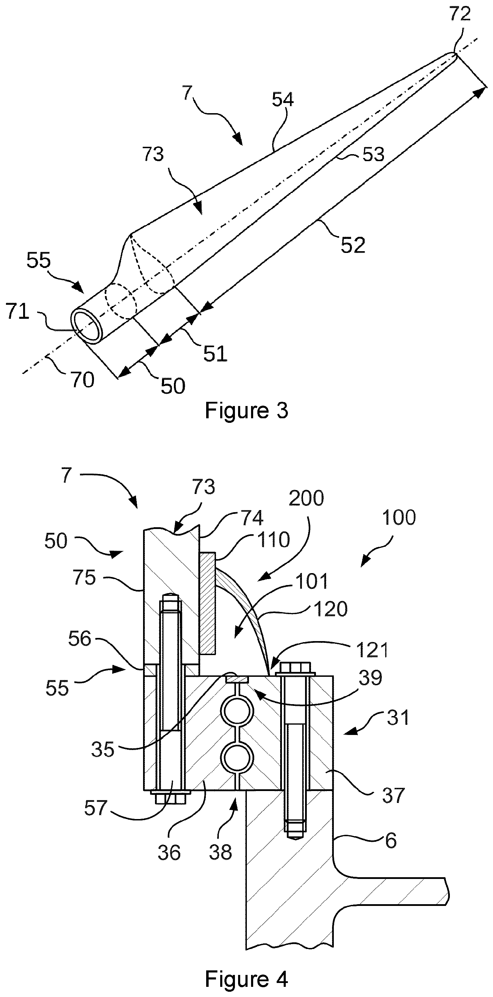

Blades 7 are coupled to the rotor hub 6 with a pitch bearing 31 in between the blade 7 and the rotor hub 6. The pitch bearing 31 comprises an inner ring and an outer ring (shown in Figure 4). A wind turbine blade may be attached either to the inner bearing ring or to the outer bearing ring, whereas the hub is connected to the other. A blade 7 may perform a relative rotational movement with respect to the rotor hub 6 when a pitch system 30 is actuated. The inner bearing ring may therefore perform a rotational movement with respect to the outer bearing ring. The pitch system 30 of Figure 2 comprises a pinion 32 that mesh with a pitch annular gear 33 provided on the inner bearing ring to set the wind turbine blade into rotation.

Figure 3 illustrates an example of a wind turbine blade 7. The wind turbine blade 7 extends in a longitudinal direction or spanwise direction 70 from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

The airfoil portion 52 has a shape designed to generate lift, whereas the blade root portion 50 has a circular or elliptical cross-section for structural considerations and for easy mounting the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52.

The wind turbine blade 7 comprises a blade shell 73. The blade shell may comprise two blade shell parts, for example, a pressure side blade shell and a suction side blade shell. The pressure side blade shell may be joined, e.g. glued or bonded, to the suction side blade shell along joining lines along the leading edge 53 and the trailing edge 54. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fiber-reinforced polymer, e.g. glass-fiber and/or carbon fiber.

The blade root portion 50 comprises a blade root attachment portion 55 configured to attach the blade root portion to a first bearing component of the pitch bearing, e.g. a bearing ring. The blade root attachment portion may comprise a plurality of fastening members distributed along the root end. In some examples, the blade root end comprises a blade flange to face the first bearing component. The blade root end may comprise a structural stiffener, e.g. a stiffening plate or a stiffening ring, at the blade root attachment portion to increase the structural resistance of the blade root portion.

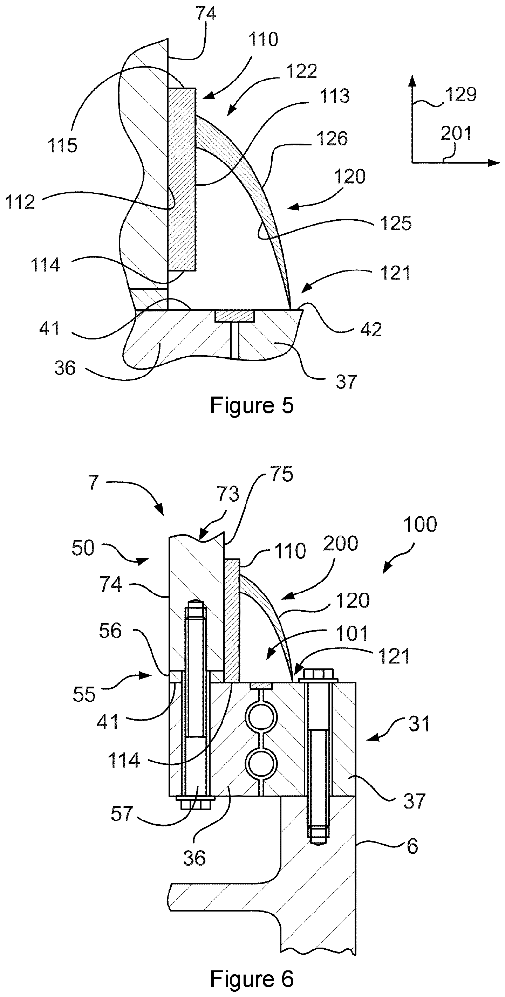

Figure 4 shows a cross-sectional view of a lubricant retention system according to one example of the present disclosure and figure 5 is a zoomed-in view of the lubricant retention system of Figure 4. The lubricant retention system 100 of this example is coupled to a blade root portion 50. The blade root portion 50 comprises a blade shell 73 comprising an inner blade shell surface 74 and an outer blade shell surface 75. The outer blade shell surface 75 defines the outer shape of the blade.

The blade root portion 50 further comprises a blade root attachment portion 55 configured to attach the blade root portion 50 to a first bearing component 36 of a pitch bearing 31. The second bearing component 37 is coupled to the rotor hub 6. Accordingly, the first bearing component 36 is configured to be coupled to a wind turbine blade 7 and the second bearing component 37 is configured to be coupled to a rotor hub 6 of a wind turbine. The blade root portion 50 of this example comprises a circular cross-section.

In this example, the first bearing component 36 is an outer ring and the second bearing component 37 is an inner ring. However, in other examples, the first bearing component is the inner ring and the second bearing component is the outer ring.

The blade root attachment portion 55 comprises a receiver to secure a blade fastener 57. The receiver may be for example an insert with an inner thread or a T-bolt connector. The first bearing component 36 of this figure comprises a through-hole. The fastener 57 may pass through the hole of the first bearing component 36 and may be secured to the receiver of the blade root attachment portion 55 to connect the blade 7 to the first bearing component 36. A plurality of fasteners or bolts may be distributed along the circumference of the first bearing component 36 to connect the pitch bearing 31 to the blade.

In this figure, the blade root attachment portion 55 comprises a mounting flange 56 to face an upper surface 41 of the first bearing component 36. In some examples, the blade root attachment portion 55 comprises a stiffener element to increase the radial stiffness of the blade. The stiffener element may be a stiffening ring. A stiffening ring may be arranged between the mounting flange and the laminate.

In figure 4, the rotor hub 6 comprises a threaded hole. A fastener, e.g. a bolt, may pass through a hole of the second bearing component 37 and may be secured, e.g. threaded, in the threaded hole of the rotor hub 6. This fastener may thus connect the rotor hub 6 to the second bearing component 37. A plurality of fasteners may be threaded in a plurality of threaded holes formed at the rotor hub 6 to connect the second bearing component 37 to the rotor hub 6. In other examples, the rotor hub and the second bearing component may comprise a plurality of through holes. Bolts may be inserted into these through holes and secured with nuts to connect the second bearing component to the hub.

The pitch bearing 31 of this example is a ball bearing and a bearing gap 38 is formed between the first bearing component 36 and the second bearing component 37. Lubricant, e.g. grease and/or oil, may be provided between the bearing components to reduce friction. This lubricant may flow through the bearing gap 38 between the first bearing component 36 and the second bearing component 37. In this example, a groove 39 is machined on the upper sides of the first and second bearing components. Lubricant may be accumulated in this groove 39. The pitch bearing 31 of this figure further comprises a bearing seal element 35 covering the groove 39. The bearing seal element 35 may help to reduce the lubricant leaks from the bearing gap 38. However, the bearing seal element 35 does not completely avoid lubricant leaks from the pitch bearing 31. The bearing seal element 35 of this example is an example of a primary sealing element.

The lubricant retention system 100 comprises a base 110 connected to the blade root portion 50. The base 110 is thus configured to be connected to the wind turbine blade 7. The base 110 comprises a base outer surface 112. In this figure, the base outer surface 112 fits the inner blade shell surface 74. In other examples, the base outer surface 112 fits the outer blade shell surface 75. The base outer surface 112 is thus configured to fit a surface of the wind turbine blade 7, e.g. the blade shell 73 and/or a blade root attachment portion 55. The base 110 of this example further comprises a base inner surface 113 opposite to the base outer surface 112.

The base 110 of this example extends from a base root end 114 to a base tip end 115 in a base longitudinal direction 129. When the base 110 is coupled to the wind turbine blade, the base longitudinal direction 129 is parallel to the longitudinal direction of the wind turbine blade. In this example, the base root end 114 of the base 110 is apart from the upper surface 41 of the first bearing component 36. However, in other examples, the base root end 114 may rest on the upper surface 41 of the first bearing component 36. In these examples, the base outer surface 112 may be coupled to the blade shell 73, e.g. to the inner blade shell surface 74, and/or to the blade root attachment portion 55, e.g. to an inner surface of the mounting flange 56.

The base 110 of this example may be connected to the blade according to any of the examples herein disclosed. For example, glue or an adhesive may be used for fixing the base outer surface 112 to the blade shell 73. However, other suitable connecting methods may be alternatively used. For example, a pressure element may be used for exerting an outwards pressure against the base inner surface 113 for fixing the base 110 to the blade shell 73. The pressure element may be a disc with a variable diameter that may be arranged inside the wind turbine blade to exercise an outwards radial pressure onto the base.

In further examples, a portion of the base, e.g. the base outer surface, may be integrated within the blade shell. The base may be arranged between fibers of the blade shell during blade manufacturing.

The base 110 of this example extends 360°. In some examples, the base 110 may comprise a plurality of annular base segments that forms a base 110 extending 360°. In some examples, the base may be formed by a single annular element extending 360°. The segments may be connected to each other by e.g. glue, adhesive or through a bolted connection.

The base 110 may comprise a plastic material. For example, the base 110 may be manufactured from glass-reinforced plastic. The base may be made from a flexible material to adjust the base 110 to the diameter of the blade root portion 50.

The lubricant retention system 100 further comprises an annular seal assembly 200. Although not shown in figure 4, the annular seal assembly 200 is formed by a plurality of annular seal segments 120 connected to each other. The annular seal segments 120 extend from a proximal end portion 122 to a distal end portion 121. The proximal end portion 122 is connected to the base 110 and the distal end portion faces the second bearing component 37.

The annular seal assembly 200 extends 360°. The angular extension of each of the annular seal segments 120 depends on the number of segments. For example, an annular seal assembly 200 may be formed by two annular seal segments 120. These two annular seal segments 120 may thus substantially extend about 180°. The annular seal assembly may be formed by any suitable number between two and twenty annular seal segments, e.g. between two and six annular seal segments. For example, when the annular seal assembly is formed by joining six annular seal segments, each of the annular seal segments substantially extends 60°.

The annular seal segments 120 are connected edge to edge to form a complete annular seal assembly 200. One edge of one annular seal segment 120 is connected to one edge of an adjacent annular seal segment 120, and so on. At least one of the annular seal segments of the plurality of the annular seal segments is removably connected to the adjacent or adjacent annular seal segments. For example, the releasable annular seal segment is configured to be releasably connected to a first adjacent annular segment and to a second annular seal segment of the plurality of annular seal segments. For example, the removable annular seal segment or segments may be connected to the adjacent annular seal segments through a bolted connection. In other examples, snap-fit connectors may be used for removably connecting one edge of one annular seal segment to one edge of an adjacent annular seal segment.

The annular seal segments 120 may be made from a flexible material to adjust the length of the distal end portion 121 to the shape of the second bearing component 37. One example of flexible material is rubber. In some examples, the annular seal segments may comprise an internal stiffener to provide stiffness to the rubber so as to maintain a specific shape of the annular seal segments 120.

In further examples, the annular seal segments 120 may comprise a plastic material, e.g. glass reinforced plastic.

In some examples, each of the plurality of annular seal segments is a releasable annular segment. The annular seal segments may thus be releasably connected to the adjacent annular seal segments. The annular seal assembly may thus be easily dismounted for performing maintenance or inspection operations.

In some examples, one or more of the annular seal segments 120 are removably coupled to the base 110. In some examples, the releasable annular seal segments may be removably coupled to the base 110. In some examples, the plurality of annular seal segments 120 is removably coupled to the base 110.

In some examples, the base may comprise a base engaging portion and the one or more annular seal segments a seal segment engaging portion for removably coupling the base to the annular seal segment. One of these engaging portions may comprise a receiver and the other a protrusion that fits the receiver. The annular seal segments 120 may be pressed against the base 110 to lock the protrusion onto the receiver. A non-permanent connection may thus be formed. Snap-fit connectors may be employed for removably connecting one or more annular seal segments 120 to the base 110. In further examples, one or more annular seal segments 120 may be bolted to the base 110.

The distal end portion 121 of the annular seal segments 120 that form the annular seal assembly 200 extends towards the second bearing component 37. In this example, the distal end portion 121 contacts the second bearing component 37. In other examples, the distal end portion 121 does not contact the second bearing component 37. A gap may thus be defined between the distal end portion 121 and the second bearing component 37.

In this example, the annular seal segments 120 extend from a radial direction 201 (perpendicular to the base longitudinal direction 129) to a direction substantially parallel to the base longitudinal direction 129. The annular seal segments 120 extend back from the proximal end portion 122 towards the distal end portion 121. The plurality of annular seal segments 120 defines a seal inner surface 125 that faces the bearing gap 38 between the first bearing component 36 and the second bearing component 37. In this example, the seal inner surface 125 comprises a concave shape. The annular seal assembly may further comprise a seal outer surface 126 opposite to the seal inner surface 125.

In use, the distal end portion 121 of each of the annular seal segments extends beyond the base root end 114. Thus, the distal end portion 121 is closer to the rotor hub 6 than the base root end 114.

In this example, the distal end portion 121 of the plurality of annular seal segments 120 contacts the upper surface 42 of the second bearing component 37. The plurality of annular seal segments 120 thus extends from the blade 7 that is connected to the first bearing component 36 towards the second bearing component 37. The lubricant retention system 100 rotates together with the first bearing component 36. The distal end portion 121 of the plurality of annular seal segments 120 may exert pressure against the upper surface 42 of the second bearing component 37 but allows the rotation of the first bearing component 36 with respect to the second bearing component 37.

In some examples, a retention member may be connected to the distal end portion 121. The retention member may be employed for reducing a gap between the distal end portion 121 and the second bearing component. For example, the gap may be formed between the upper surface 42 of the second bearing component 37 so as to extend along a direction substantially parallel base longitudinal direction 129. This gap may be formed when the distal end portion 121 is not in contact with a surface of the second bearing component 37. The retention member may comprise a flexible material, e.g. rubber or brush with a plurality of bristles. The retention member may alternatively or additionally comprise a material such as an absorbent material, a textile material, a felt-type material, a hydrophobic material, a hydrophilic material, a combination of hydrophobic and hydrophilic materials, a sponge material, a porous material, and/or a filtering material or any combination thereof.

The retention member 150 may have material properties such that it retains certain types of fluids while repelling others, for example, based on viscosity or other physical or chemical properties of the fluid to be contained or repelled. For example, the material may absorb lubricant such pitch bearing lubricant, e.g. grease while allowing water to pass through and leave the chamber 101.

The retention member 150 may have structural (e.g. geometrical, porosity) properties such that it retains certain types of fluids while repelling others. For example, the material may absorb grease such pitch bearing grease while allowing water to pass through and leave the chamber 101.

The retention member may extend substantially perpendicular to the upper surface 42 of the second bearing component 37. Alternatively, the retention member may have a curved or arcuate profile, for example, forming a concavity facing towards the inside of the formed chamber 101. The retention member may be a separate element from the distal end portion 121, or may be integrally formed with the distal end portion 121.

As in this example the distal end portion 121 contacts the upper surface 42 of the second bearing component 37, a chamber 101 is formed enclosing the bearing gap 38 of the pitch bearing 31. Lubricant spilling out from the groove 39 covered by the bearing seal element 35 may be retained within the chamber 101. Accordingly, the leaking point of the pitch bearing 31 is enclosed or substantially enclosed. The sealing effect is consequently improved. Lubricant leaks from the pitch bearing 31 may be stored within the chamber 101. The volume of lubricant leaks retained by the chamber may thus be increased. In this example, the chamber 101 is arranged inside the wind turbine blade 7. The chamber 101 of figures 4 and 5 is thus substantially delimited by the seal inner surface 125.

Figure 6 shows a lubricant retention system according to some examples of the present disclosure. Contrary to the lubricant retention system 100 of figures 4 and 5, the lubricant retention system 100 of figure 6 is connected to the outer blade shell surface 75.

In this example, the first bearing component 36 comprises an inner ring and the second bearing component 37 comprises an outer ring. The diameter of the second bearing component 37 of this figure is greater than the diameter of the first bearing component 36. As explained before, the first and/or the second bearing component may comprise a stiffener element to increase the radial stiffness of the blade-hub connection.

The lubricant retention system 100 of this figure is similar to the examples described with respect to figures 4 and 5. However, in this figure, the base outer surface 112 of the base 110 fits the outer blade shell surface 75. Furthermore, the base root end 114 of the base 110 of this figure rests on the upper surface 41 of the first bearing component 36. The base outer surface 112 of this example also fits the outer surface of the mounting flange 56. In other examples, there may be a gap between the base root end 114 and the upper surface 41 of the first bearing component 36.

In figure 6, the base 110 surrounds the outer blade shell surface 75. Glues or adhesives may be used for connecting the base outer surface 112 to the outer blade shell surface 75. In some examples, a pressure element may be used to exert an inward pressure against the base 110. For example, a ring arranged around the base may press the base to the blade shell 73. Steel wires may be arranged around the base to secure the base to the outer blade shell surface 75, e.g. by wrapping the base and the blade.

As previously described, in some examples, the plurality of annular seal segments 120 that forms the annular seal assembly 200 extends to contact (or substantially contact) the upper surface 42 of the second bearing component 37 so as to form the chamber 101 to collect lubricant leaks from the pitch bearing 31.

In other examples, the distal end portion 121 may contact (or substantially contact) a lateral surface 43 of the pitch bearing. Fasteners connecting the second bearing component 37 to the rotor hub 6 may thus be covered by the annular seal assembly 200. These fasteners may thus be protected from environmental conditions, e.g. rain. Corrosion of the fasteners may thus be reduced.

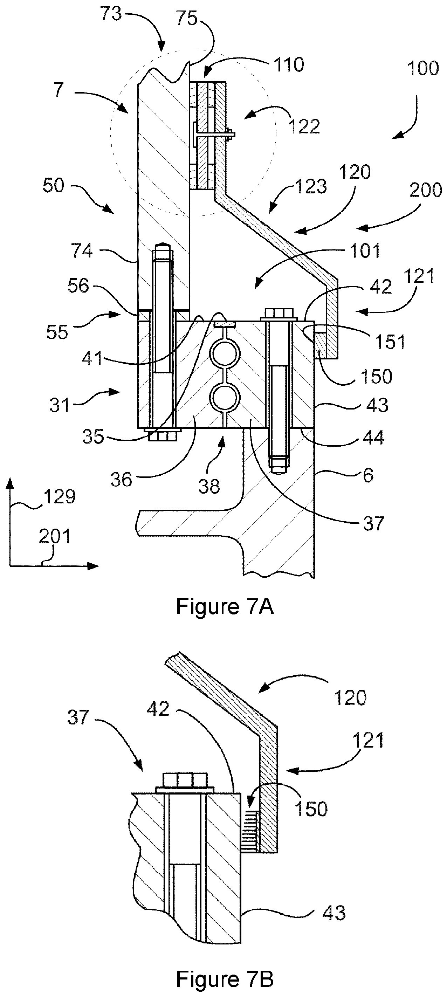

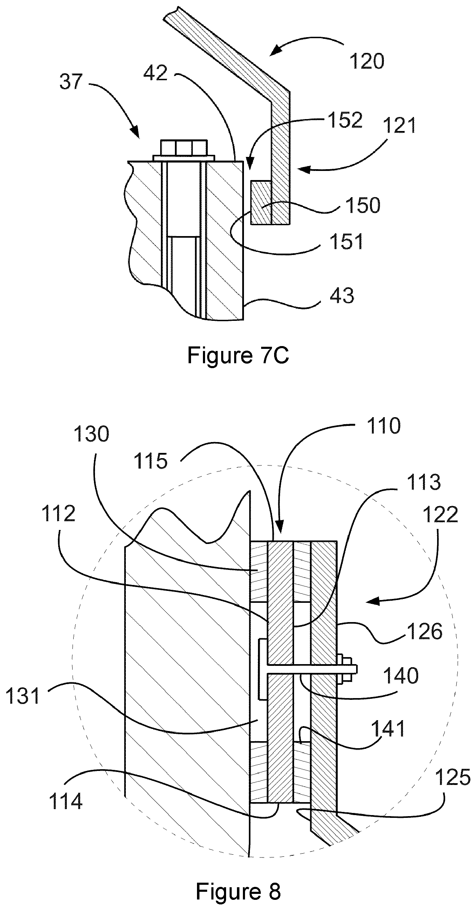

Figure 7A shows a cross-sectional view of a lubricant retention system mounted on a wind turbine blade according to one example of the present disclosure and Figure 8 is an enlarged view of the connection of the base to the blade shell of Figure 7A.

The blade root portion 50 comprises a blade root attachment portion 55 having a mounting flange 56 facing the upper surface 41 of the first bearing component 36. In this example, the first bearing component 36 is an inner ring and the second bearing component 37 is an outer ring. In other examples, the first bearing component 36 may be an outer ring and the second bearing component 37 may be an inner ring. The first bearing component 36 and the second bearing component 37 may be respectively connected to the blade 7 and to the rotor hub 6 according to any of the examples herein disclosed.

The pitch bearing 31 of this example comprises a bearing seal element 35 arranged in a groove defined between the first bearing component 36 and the second bearing component 37. The bearing seal element 35 is a primary seal for the pitch bearing 31.

The base 110 of this example comprises a substantially cylindrical shape. The base 110 extends from a base root end 114 to a base tip end 115 along a base longitudinal direction 129. The base 110 of this example comprises a base outer surface 112 that fits the outer shape of the blade shell 73. The base 110 further comprises a base inner surface 113 that faces the annular seal assembly 200. The base 110 encloses the outer shape of the blade 7.

In this example, the base 110 is bonded to the outer blade shell surface 75. For example, glue and/or adhesive may be used for bonding the base 110 to the outer blade shell surface 75. In these figures, a pair of double-sided tapes 130 are arranged between the base outer surface 112 and the outer blade shell surface 75. In this example, one double-sided tape is arranged at the base root end 114 and the other one at the base tip end 115. In these figures, glue 131 is provided between the pair of double-sided tapes 130. Glue 131 may be injected into the annular recess defined between the pair of double-sided tapes 130. The combination of glue 131 and the double-sided tapes 130 provides a bonding force to retain the base 110 joined to the outer blade shell surface 75. The double-sided tapes 130 may be used to position the base 110 and then glue may be applied to permanently bond the base outer surface 112 to the outer blade shell surface 75.

In other examples, the base 110 may be connected to the blade according to any other suitable method. For example, the base may also be integrated with the blade shell during blade manufacturing.

The base 110 may be formed by a plurality of base segments. These base segments may be joined together edge to edge. This may simplify the connection of the base 110 to the blade 7, in particular, in existing wind turbine blades. In other examples, the base 110 may be formed by a single member. The opposite edges of this single member may be arranged to enclose the blade shell and may then be connected to each other.

The lubricant retention system 100 comprises a plurality of annular seal segments 120. In these figures, each of the plurality of annular seal segments 120 is removably coupled to the base 110. In other examples, some annular seal segments 120 may be fixedly coupled to the base 110 and some annular seal segments 120 may be removably coupled to the base 110. A seal inner surface 125 faces the base inner surface 113. The seal inner surface 125 defines the inner surface of the annular seal assembly 200, i.e. the surface configured to define the chamber 101 for retaining lubricant leaks.

In this example, a fastener 140 may be used for connecting the base 110 to a proximal end portion 122 of each of the plurality of annular seal segments 120. The fastener may be a bolt, e.g. a T-bolt. The fastener may pass through corresponding holes provided at the base 110 and at the proximal end portion 122. A thread may be secured to the fastener. To ensure the fluid-tightness of the chamber 101, a pair of gaskets 141 may be provided between the base outer surface 112 and the seal inner surface 125 at the proximal end portion 122 of the annular seal segments 120.

Each of the plurality of annular seal segments 120 that form the annular seal assembly extends from the proximal end portion 122 to the distal end portion 121. The distal end portion 121 extends towards the second bearing component 37. In this example, the distal end portion 121 further extends alongside (that is, along a direction 129) a portion of a lateral surface 43 of the second bearing component 37. The distal end portion 121 thus extends beyond the upper surface 42 of the second bearing component 37. The lubricant retention system 100 may thus define a chamber 101 to enclose the bearing gap 38 of the pitch bearing so as to accumulate lubricant leaks. In addition, as the annular seal assembly 200 covers the pitch bearing 31 and the fasteners connecting the second bearing component 37 to the rotor hub 6, the lubricant retention system 100 prevents water and/or dust from entering the pitch bearing. A seal outer surface 126 may act as a cover for the pitch bearing. Protection of the pitch bearing is consequently increased. Corrosion of the pitch bearing and/or of the fasteners connecting the second bearing component 37 to the rotor hub 6 is prevented.

The lateral surface 43 extends between the upper surface 42 and the lower surface 44 of the second bearing component 37. The lower surface 44 of the second bearing component 37 faces the rotor hub 6, whereas the upper surface 42 faces the blade 7.

The proximal end portion 122 of these figures extends substantially parallel to the base 110. The proximal end portion 122 thus extends substantially parallel to the base longitudinal direction 129. When the plurality of annular seal segments 120 are joined to each other to define the annular seal assembly, the proximal end portion 122 of the plurality of annular seal segments defines a cylindrical shape. The proximal end portion 122 of the plurality of annular seal segments 120 defines a proximal end portion diameter. In this example, the proximal end portion 122 of the plurality of annular seal segments 120 encloses the base 110.

In this example, when the plurality of annular seal segments 120 are joined to each other to form the annular seal assembly 200, the distal end portion 121 of the plurality of annular seal segments 120 defines a cylindrical shape having a distal end portion diameter. When assembled and mounted on the blade, the distal end portion 121 of the plurality of annular seal segments 120 extends substantially parallel to the base longitudinal direction 129. The distal end portions 121 of this example substantially enclose the second bearing component 37.

The distal end portion diameter of this example is greater than the proximal end portion diameter. The diameter of the annular seal assembly thus increases from the proximal end portion diameter to the distal end portion diameter. This increase in diameter allows defining the chamber 101 to store lubricant leaking from the pitch bearing.

Each of the plurality of annular seal segments 120 comprises a central portion 123 connecting the proximal end portion 122 to the distal end portion 121. The central portion 123 of each of the annular seal segments comprises an inclined surface. When the plurality of annular seal segments 120 forms the annular seal assembly, the central portions 123 comprise a substantially frustum conical shape.

In this example, each of the plurality of annular seal segments 120 comprises a retention member 150 to reduce a gap (defined in the direction 201) between the distal end portion 121 and a lateral surface 43 of the second bearing component 37 when the lubricant retention system (100) is mounted on the wind turbine blade (7). The retention member 150 of these figures is connected to the distal end portion 121. The retention member 150 of this example extends substantially perpendicular to the lateral surface 43 of the second bearing component 37. In other examples, the retention member 150 may extend in a curved or arcuate manner, for example, forming a concave area facing the interior of the chamber 101.

In use, a retention member tip 151 of the retention member 150 may contact the second bearing component 37. In some examples, the retention member 150 may exert pressure against the second bearing component 37 to prevent lubricant flow between the second bearing component 37 and the distal end portion 121. In the example of these figures, the retention member tip 151 is configured to contact the lateral surface 43 of the second bearing component 37. The retention member 150 of these figures faces the lateral surface 43 of the second bearing component 37. The retention member 150 may extend from the distal end portion 121 of the plurality of annular seal segments 120 to the retention member tip 151 inwardly in a radial direction 201. The retention member 150 may thus close a gap defined between the distal end portion 121 and the lateral surface 43 of the second bearing component 37.

The retention member extends between the edges of each of the annular seal segments. When the annular seal segments are joined together, the plurality of retention members define a ring. The retention members may thus extend along an inner diameter of the annular seal assembly.

In some examples, the retention member 150 is detachably connected to the distal end portion 121 of the plurality of annular seal segments 120. The retention member may thus be easily removed. As the retention member may be in contact with the second bearing component 37, the retention member tip 151 may suffer from wear. Furthermore, the retention member 150 may get excessively impregnated by lubricant leaking from the pitch bearing. To maintain a sealing effect, the retention member 150 may be replaced by a new retention member. Maintenance operations may thus be simplified.

In some examples, snap-fit connectors may be used for removably or detachably connecting the retention member 150 to the distal end portion 121. In some examples, the retention member 150 may comprise a protrusion and the distal end portion 121 a groove to receive this protrusion. In some examples, the retention member 150 may be fastened or bolted to the distal end portion 121.

In the example of these figures, the annular seal segments 120 comprise a plastic material. An annular seal assembly with sufficient stiffness to retain the lubricant and relatively low weight may thus be obtained. For example, the plastic material may comprise glass-reinforced plastic. In other examples, the annular seal segments 120 may comprise rubber. A stiffener may be provided within the rubber material to prevent excessive deformation of the annular seal assembly.

The base 110 may also comprise a plastic material. For example, the base 110 may be manufactured from glass-reinforced plastic.

The retention member 150 may comprise a flexible material. The pressure exerted by the retention member 150 against the second bearing component 37, e.g. against the lateral surface 43 of the second bearing component 37, may thus be adjusted. In some examples, the retention member 150 may comprise rubber.

In some examples, the retention member 150 comprises a brush having a plurality of bristles. The bristles are oriented towards the second bearing component 37, e.g. extend perpendicular to the lateral surface 43 of the second bearing component 37. The bristles may bend when contacting the second bearing component 37. The brush may absorb and retain lubricant, e.g. grease. The sealing effect may be enhanced by the combination of the chamber 101 formed by the annular seal assembly 200 to store lubricant and the brush arranged at the distal end portion 121. Large amounts of lubricant leaking from the pitch bearing may be thus retained with the lubricant retention system according to the present disclosure.

According to some examples, as shown in figure 7B, the retention member 150 may comprise a brush having bristles, some bristles may contact the lateral surface 43, while other bristles of the brush may not contact the surface 43. In some examples, the dimensions of the brush are such that none of the bristles contact the lateral surface 43 of the second bearing 37.

According to some examples, as shown in figure 7C, the retention member tip 151 does not contact the lateral surface 43 of the second bearing 37. Thus, a gap 152 remains between the retention member 150 and the lateral surface 43 of the second bearing 37.

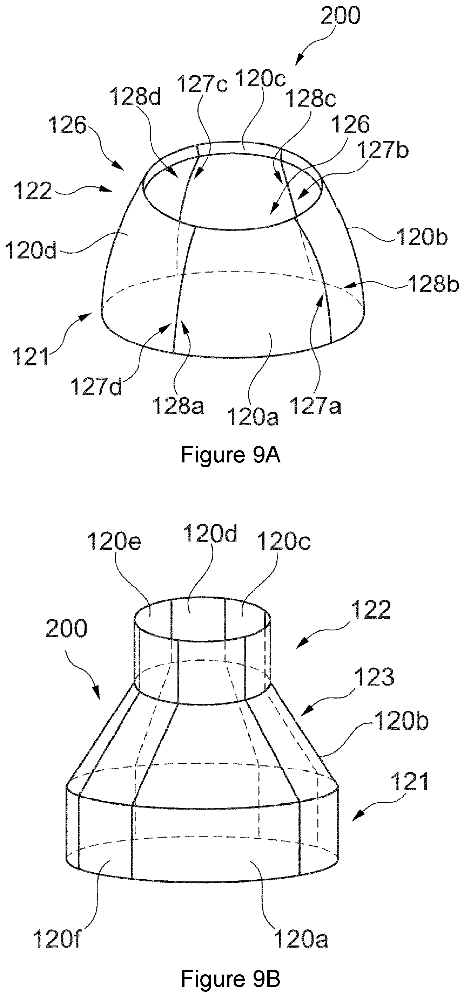

Figure 9A schematically represents an annular seal assembly of a lubricant retention system according to an example of the present disclosure. The annular seal assembly 200 of this figure may be used in the lubricant retention systems 100 depicted in figures 4 - 6 of the present disclosure.

The annular seal assembly 200 of figure 9A is formed by four annular seal segments 120a, 120b, 120c and 120d that extend from a proximal end portion 122 to a distal end portion 121. The connection of these annular seal segments defines a seal inner surface 125 to face the pitch bearing and a seal outer surface 126 opposite to the seal inner surface 125.

Each of these annular seal segments extends a length of an arc of the circumference between a first edge and a second edge. For example, the annular seal segment 120a extends between the first edge 127a and the second edge 128a. In this example, each of these annular seal segments substantially extends 90° between the respective first edge and second edges. In other examples, the annular seal segments may extend any suitable portion of the arc of the circumference.

In this example, the annular seal segment 120a is a removably annular seal segment. The annular seal segment 120a is removably connected to the annular seal segments 120b and 120d. The first edge 127a of the annular seal segment 120a is removably connected to the second edge 128b of the annular seal segment 120b, and the second edge 128a of the annular seal segment 120a is removably connected to the first edge 127d of the annular seal segment 120d. The annular seal segment 120a may thus be easily removed for inspecting the level of lubricant retained by the annular seal assembly 200.

The removable connection may be according to any of the examples herein disclosed. For example, a bolted connection and/or snap-fit connection may be used to removably connect the annular seal segment 120a to the annular seal segments 120d and 120b.

In some examples, the first edge 127a may engage the second edge 128b. For example, one of these edges 127a and 128b may comprise a flat edge portion and the other a stepped edge portion. These shapes may enhance the connection between the annular seal segments 120a and 120b. In other examples, the edges 127a and 128b may comprise interlocking edges. The second edge 128a of the annular seal segment 120a and the first edge 127d of the annular seal segment 120d may be connected in a similar manner.

In this example, the annular seal segment 120c is permanently connected to the annular seal segments 120b and 120d. In other examples, each of the plurality of annular seal segments may be removably connected with the adjacent annular seal segments. The first edge 127b of the annular seal segment 120b and the second edge 128c of the annular seal segment 120c are permanently connected. Similarly, the first edge 127c of the annular seal segment 120c is permanently connected to the second edge 128d of the annular seal segment 120d. Glue or welding methods may be used for establishing a fixed connection.

In this example, the annular seal segment 120a is configured to be detachably connected to the base. This may allow completely removing the annular seal segments from the base and from the remaining annular seal segments. In some examples, the set of fixedly connected annular seal segments, in this example 120b, 120c and 120d, may be detachably connected to the base. This set of annular seal segments may thus be disconnected from the base together.

Figure 9B schematically represents an annular seal assembly of a lubricant retention system according to an example of the present disclosure. The annular seal assembly 200 of this figure may be used in the lubricant retention systems 100 depicted in figures 7 - 8 of the present disclosure.

In this example, the annular seal assembly is formed by six annular seal segments 120a, 120b, 120c, 120d, 120e and 120f. These six annular segments defined the annular seal assembly extending from the proximal end portion 122 to the distal end portion 121 through the central portion 123.

In the example of figure 9B, the annular seal segments extend substantially 60°. The annular seal segments of this example are removably annular seal segments. For example, the annular seal segment 120d may be removably connected to the annular seal segments 120c and 120e. These annular seal segments may be connected to the corresponding edges according to any of the examples herein disclosed. For example, each of the annular seal segments may comprise a stepped edge portion and a flat edge portion. The stepped edge portion of one annular seal segment may fit the flat edge portion of the adjacent annular seal segments. Accordingly, positioning and connecting the annular seal segments may be improved.

The plurality of the annular seal segments of this example is also removably connected to the base. Accordingly, each of the annular seal segments may be independently connected and disconnected from the base and from the adjacent annular seal segments in an easy manner. Inspections or maintenance operations may thus be simplified and more efficiently performed.

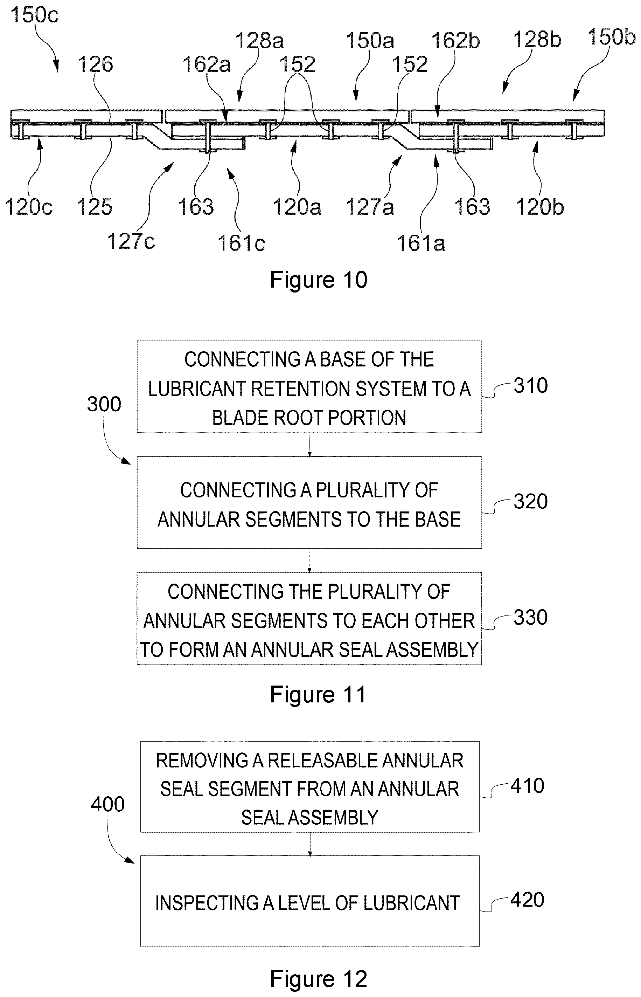

Figure 10 schematically represents a bottom view of a portion of an annular seal assembly according to an example of the present disclosure. The annular seal segment 120a of this example is removably coupled to the annular seal segments 120b and 120c.

The annular seal segments 120a, 120b and 120c of this figure define a seal inner surface 125 to face the pitch bearing and a seal outer surface 126 that faces the opposite side, e.g. outside the wind turbine.

A first edge 127a and a second edge 128a of the annular seal segment 120a are, respectively, removably connected to the second edge 128b of the annular seal segment 120b and to the first edge 127c of the annular seal segment 120c.

The annular seal segments of this example comprise a stepped edge portion 161a and 161c and a flat edge portion 162a and 162b. The stepped edge portion of an annular seal segment is configured to overlap the flat edge portion of an adjacent annular segment.

When the annular seal assembly is assembled, the stepped edge portions extend outwards so as to overlap the flat edge portions. The seal inner surface 125 may thus remain substantially constant, however, the stepped edge portions generate protrusions on the seal outer surface 126. The stepped edge portions may thus engage the corresponding flat edge portions.

In this example, the annular seal segment 120a comprises a first edge 127a having a stepped edge portion 161a and a second edge 128b having a flat edge portion 162a. The stepped edge portion 161a of the annular seal segment 120a engages the flat edge portion 162b arranged at the second edge 128b of the annular seal segment 120b. Similarly, the annular seal segment 120c comprises a first edge 127a having a stepped edge portion 161c. The stepped edge portion 161c of the annular seal segment 120c engages the flat edge portion 162a of the second edge 128a of the annular seal segment 120a.

A seal fastener 163 may be inserted through a hole arranged at the flat edge portion and the stepped edge portion. The seal fasteners, e.g. bolts, may be inserted from the seal inner surface 125 towards the seal outer surface 126. A nut may be secured on a thread of the seal fasteners to join the stepped edge portion to the flat edge portion of two consecutive annular seal segments. A bolted connection may thus be established to connect the annular seal segments to each other. A gasket may be provided between the flat edge portion and the stepped edge portion of two consecutive annular seal segments.

In this example, the annular seal segments 120a, 120b and 120c respectively comprise a retention member 150a, 150b and 150c. The retention members 150a, 150b and 150c may comprise a brush with a plurality of bendable bristles. At least some of these bendable bristles may press a lateral surface of a second bearing component to seal the cavity for accumulating lubricant spilling out from the pitch bearing.

The retention members of this figure are removably attached to the annular seal segments. A plurality of retention member fasteners 152 may be provided for joining the retention member to the corresponding annular seal segment. For example, the retention member 150a is bolted to the annular seal segment 120a through a plurality of retention member fasteners 152.

The retention members may be connected to the corresponding annular seal segment prior to joining the annular seal segments to form the annular seal assembly. The retention member may thus be mounted at a manufacturing plant. For example, the retention member 150a may be connected to the annular seal segment 120a through the retention member fasteners. Then, the annular seal segment 120a may be connected to the annular seal segments 120b and 120c through the seal fasteners 163. In this example, the seal fastener 163 may also connect the retention member to the annular seal member.

Figure 11 is a block diagram of a method 300 for mounting a lubricant retention system for a pitch bearing in a wind turbine blade according to an example of the present disclosure. The lubricant retention system 100 and the wind turbine may be according to any of the examples herein disclosed. In this example, the pitch bearing 31 comprises a first bearing component 36 and a second bearing component 37, the first bearing component 36 configured to rotate with respect to the second bearing component 37.

At block 310, connecting a base 110 of the lubricant retention system 100 to a blade root portion 50 of the wind turbine blade 7 configured to be coupled to the first bearing component 36 is represented. The base 110 may be connected to a blade shell 73 and/or to a blade root attachment portion 55, e.g. a mounting flange. 56
In some examples, connecting the base 110 to the blade root portion 50 comprises positioning a base outer surface 112 of the base 110 to fit a surface of the wind turbine blade 7. The base outer surface 112 may thus be fitted with the surface of the wind turbine blade 7.

When the wind turbine blade 7 is coupled to the outer ring of the pitch bearing 31, the method may comprise fitting the base outer surface 112 with the inner blade shell surface 74 and/or an inner surface of the blade root attachment portion 55, e.g. an inner surface of a mounting flange 56. The base 110 is thus positioned within the wind turbine blade 7. In these examples, connecting the base 110 to the blade root portion 50 may comprise adhering the base outer surface 112 to the inner blade shell surface 74 and/or an inner surface of the blade root attachment portion 55.

When the wind turbine blade 7 is coupled to the inner ring of the pitch bearing 31, the method may comprise fitting the base outer surface 112 with the outer blade shell surface 75 and/or an outer surface of the blade root attachment portion 55, e.g. an outer surface of a mounting flange 56. The base 110 is thus positioned around the wind turbine blade 7.

In some examples, connecting the base 110 to the blade root portion 50 may comprise adhering the base outer surface 112 to the blade shell 73 and/or to the blade root attachment portion 55. Adhering or bonding the base outer surface 112 to the blade 7 may comprise arranging a pair of double-sided tapes 130 between the base outer surface 112 and the blade 7. Then, glue 131 may be inserted between this pair of double-sided tapes 130 to increase the adherence of the joint.

In some examples, a fastener 140 may be inserted through a hole arranged on the base 110 from the base outer surface 112 to the base inner surface 113. This fastener 140 may be used for removably connecting the base 110 to the annular seal segment 120. The fastener 140 may be arranged between the double-sided tapes 130. Glue 131 may be applied after the insertion of the fastener 140. A head of the fastener 140 may thus be fixed to the base outer surface 112.

In some examples, a pressing element may be positioned on the base inner surface 113 to press the base 110 against the blade 7. The pressing element may be a ring with a variable diameter to adjust the pressure against the base.

These connection methods allow connecting the lubricant retention system 100 to existing wind turbines. Accordingly, existing wind turbines may be retrofitted.

In further examples, the base 110 may be connected to the blade root portion 50 during manufacturing. For example, the blade shell 73 of the blade root portion 50 may be infused together with the base 110. In these examples, the method may further comprise coupling the blade 7 having the base 110 of the lubricant retention system 100 to the first bearing component 36. This may involve lifting the blade 7 with the base 110 of the lubricant retention system from the ground to attach the blade 7 to the first bearing component 36.

The method 300 further comprises connecting a plurality of annular seal segments 120 to the base 110 in such a way that a distal end portion 121 of the plurality of annular seal segments 120 extends towards the second bearing component 37 for defining a chamber 101 for retaining lubricant from the pitch bearing 31, as represented at block 320. The annular seal segments 120 may be positioned according to any of the examples herein disclosed. For example, the annular seal segment 120 may be positioned such that the distal end portion 121 faces the upper surface 42 or a lateral surface 43 of the second bearing component 37.

The annular seal segments 120 may be removably connected to the base 110. In some examples, the plurality of annular seal segments 120 is removably connected to the base 110. A snap-fit connection or a bolted connection may be employed for removably connecting the annular seal segments 120 to the base 110.

In some examples, the fastener 140 fixedly connected to the base 110 may be inserted through a hole arranged at the proximal end portion 122 of an annular seal segment 120. A nut may be threaded on the fastener 140 to secure the proximal end portion 122. A gasket 141 may be arranged between the base 110 and the proximal end portion 122 to enhance the sealing effect of the lubricant retention system 100.

In further examples, the annular seal segments 120 may be fixedly connected to the base. Glue or adhesive may be used for fixedly connecting the annular seal segments 120 to the base 110. In some examples, some annular seal segments of the plurality of annular seal segments 120 may be fixedly connected to the base 110 and some annular seal segments of the plurality of annular seal segments 120 may be removably or detachably connected to the base 110.

At block 330, connecting the plurality of annular seal segments to each other to form an annular seal assembly is represented. Connecting the plurality of annular seal segments comprises releasably connecting a releasable annular seal segment of the plurality of annular seal segments to the other annular seal segment or annular seal segments of the plurality of annular seal segments. At least one of the annular seal segments is thus removably connected to the adjacent annular seal segment or segments.

The releasable annular seal segment or segments may be connected to the adjacent annular seal segments according to any of the examples herein described. For example, a stepped edge portion 161 of an annular seal segment 120 may be positioned to overlap a flat edge portion 162 of an adjacent annular seal segment. Once the stepped edge portion 161 engages the flat edge portion 162 a seal fastener 163 may be inserted through a hole formed at the flat edge portion 162 and at the stepped edge portion 161 of two consecutive annular seal segments. In some examples, a gasket may be arranged between the flat edge portion 162 and the stepped edge portion 161.

In some examples, the annular seal segments 120 may be connected to each other to form the annular seal assembly 200 before connecting each of the annular seal segments 120 to the base 110. In other examples, the plurality of annular seal segments 120 may be first connected to the base 110 and then the annular seal segments 120 may be joined together. In further examples, some annular seal segments of the plurality of annular seal segments 120 may be joined together before connecting these annular seal segments 120 to the base 110.

In some examples, the method 300 may comprise connecting a retention member 150 to each of the plurality of annular seal segments 120 prior to connecting the plurality of annular seal segments 120 to each other and/or connecting the plurality of annular seal segments 120 to the base 110. The retention member may be connected to the annular seal segments according to any of the examples herein disclosed. The retention member 150 may be removably connected to the annular seal segments 120, e.g. through a bolted connection.

Figure 12 is a block diagram of a method 400 for performing maintenance operations in a wind turbine. The wind turbine comprises a lubricant retention system 100 for collecting lubricant spilling out from the pitch bearing 31. The lubricant retention system 100 may be according to any of the examples herein disclosed.

At block 410, removing a releasable annular seal segment from an annular seal assembly 200 formed by a plurality of annular seal segments 120 of a lubricant retention system 100 for a pitch bearing 31. The releasable annular seal segment may be disconnected from the annular seal assembly 200 according to any of the examples herein disclosed. For example, fasteners connecting the releasable annular seal segment to the adjacent annular seal segments may be unscrewed.

In some examples, removing the releasable annular seal segment may comprise disconnecting the releasable annular seal segment from the base 110. For example, a proximal end portion 122 of the releasable annular seal segment may be unscrewed from the base 110.

The method 400 further comprises inspecting a level of lubricant leaked from the pitch bearing 31 retained in a chamber 101 defined by the annular seal assembly 200, as represented at block 420. The amount of lubricant contained within the chamber 101 may thus be observed.

Depending on the amount of lubricant collected by the lubricant retention system, the method may comprise extracting the lubricant retained in the chamber 101 of the lubricant retention system 100. In some examples, extracting the lubricant retained in the chamber 101 may comprise disconnecting a retention member 150 from the distal end portion 121 of the releasable annular seal segment. The retention member 150, e.g. brush having a plurality of bristles, may be cleaned to extract the lubricant impregnating the bristles. In some examples, the disconnected retention member 150 may be replaced by a new retention member to ensure the sealing effect of the lubricant retention system.

The releasable annular seal segment may then be connected again the base 110 and to the adjacent annular seal segments. In some examples, the method 400 may comprise disconnecting several releasable annular seal segments from the plurality of annular seal segments that form the annular seal assembly. The retention member 150 of these releasable annular seal segments may be cleaned and/or replaced with a new retention member.

## Claims

1. A lubricant retention system (100) for a pitch bearing (31) of a wind turbine, wherein the pitch bearing (31) comprises a first bearing component (36) to be coupled to a wind turbine blade (7) and a second bearing component (37) to be coupled to a rotor hub (6) of a wind turbine, the first bearing component (36) rotatable with respect to the second bearing component (37); the lubricant retention system (100) comprising:
a base (110) to be connected to a wind turbine blade (7), the base (110) comprising a base outer surface to fit a surface of the wind turbine blade (7);
a plurality of annular seal segments (120) to be connected to the base (110), wherein the annular seal segments of the plurality of annular seal segments (120) are to be connected to each other to form an annular seal assembly (200);
wherein the plurality of annular seal segments (120) comprises a distal end portion (121), wherein when the lubricant retention system (100) is mounted on the wind turbine blade (7), the distal end portion (121) extends towards the second bearing component (37) for defining a chamber (101) for retaining lubricant from the pitch bearing (31); and
wherein the plurality of annular seal segments (120) comprises a releasable annular seal segment to be releasably connected to another of the annular seal segments of the plurality of annular seal segments (120).

2. The lubricant retention system (100) according to claim 1, wherein the releasable annular seal segment is to be releasably connected to the base (110).

3. The lubricant retention system (100) according to any of claims 1 - 2, wherein the distal end portion (121) of the annular seal segments (120) further extends alongside a portion of a lateral surface (43) of the second bearing component (37) when the lubricant retention system (100) is mounted on the wind turbine blade (7).

4. The lubricant retention system (100) according to any of claims 1 - 3, wherein the plurality of annular seal segments (120) comprises a retention member (150) connected to the distal end portion (121) to reduce a gap between the distal end portion (121) and the second bearing (37) when the lubricant retention system (100) is mounted on the wind turbine blade (7).

5. The lubricant retention system (100) according to claim 4, wherein the retention member (150) is detachably connected to the distal end portion (121) of the plurality of annular seal segments (120).

6. The lubricant retention system (100) according to any of claims 4 - 5, wherein the retention member (150) comprises a brush having a plurality of bristles.

7. The lubricant retention system (100) according to any of claims 4 - 6, wherein the retention member (150) extends from the distal end portion (121) of the plurality of annular seal segments (120) to a retention member (151) tip inwardly in a radial direction (201).

8. The lubricant retention system (100) according to any of claims 1 - 7, wherein the plurality of annular seal segments (120) comprises:
a proximal end portion (122) to be connected to the base (110) and extending substantially parallel to the base (110); the proximal end portion (122) defining a proximal end portion diameter; and
a central portion (123) connecting the proximal end portion (122) to the distal end portion (121).

9. The lubricant retention system (100) according to claim 8, wherein the distal end portion (121) defines a distal end portion diameter and wherein the distal end portion diameter is greater than the proximal end portion diameter.

10. The lubricant retention system (100) according to any of claims 1 - 9, wherein the plurality of annular seal segments (120) comprises a stepped edge portion (161) and a flat edge portion (162), wherein the stepped edge portion (161) of an annular seal segment of a plurality of annular seal segments (120) is to overlap the flat edge portion (162) of an adjacent annular seal segment of the plurality of annular seal segments (120).

11. The lubricant retention system (100) according to any of claims 1 - 10, wherein the plurality of annular seal segments (120) are releasable annular seal segments.

12. The lubricant retention system (100) according to any of claims 1 - 11, wherein the plurality of annular seal segments (120) comprises a plastic material.

13. A wind turbine blade (7) comprising a lubricant retention system (100) according to any of claims 1-12.

14. The wind turbine blade (7) of claim 13 comprising:
a blade shell (73) comprising an inner blade shell surface (74) and an outer blade shell surface (75);
a blade root attachment portion (55) to attach a blade root portion (50) to a first bearing component (36) of a pitch bearing (31);
wherein the base (110) of the lubricant retention system (100) is coupled to the blade shell (73) and/or the blade root attachment portion (55).

15. A method (300) for mounting a lubricant retention system (100) for a pitch bearing (31) in a wind turbine blade (7), wherein the pitch bearing (31) comprises a first bearing component (36) and a second bearing component (37), the first bearing component (36) is to rotate with respect to the second bearing component (37), the method (300) comprising:
connecting (310) a base (110) of the lubricant retention system (100) to a blade root portion (50) of the wind turbine blade (7) configured to be coupled to the first bearing component (36);
connecting (320) a plurality of annular seal segments (120) to the base (110) in such a way that a distal end portion (121) of the plurality of annular seal segments (120) extends towards the second bearing component (37) for defining a chamber (101) for retaining lubricant from the pitch bearing (31); and
connecting (330) the plurality of annular seal segments (120) to each other to form an annular seal assembly (200); wherein connecting (300) the plurality of annular seal segments (120) comprises releasably connecting a releasable annular seal segment of the plurality of annular seal segments (120) to another of the annular seal segments of the plurality of annular seal segments (120).

## Patentansprüche

1. Ein Schmiermittelrückhaltesystem (100) für ein Pitchlager (31) einer Windturbine, wobei das Pitchlager (31) ein erstes Lagerbauteil (36), das mit einem Windturbinenblatt (7) zu koppeln ist, und ein zweites Lagerbauteil (37), das mit einer Rotornabe (6) einer Windturbine zu koppeln ist, umfasst, wobei das erste Lagerbauteil (36) in Bezug auf das zweite Lagerbauteil (37) drehbar ist; wobei das Schmiermittelrückhaltesystem (100) Folgendes umfasst:
eine Basis (110), die mit einem Windturbinenblatt (7) zu verbinden ist, wobei die Basis (110) eine Basisaußenfläche umfasst, um zu einer Fläche des Windturbinenblatts (7) zu passen;
eine Vielzahl von ringförmigen Dichtungssegmenten (120), die mit der Basis (110) zu verbinden sind, wobei die ringförmigen Dichtungssegmente der Vielzahl von ringförmigen Dichtungssegmenten (120) miteinander zu verbinden sind, um eine ringförmige Dichtungsbaugruppe (200) zu bilden;
wobei die Vielzahl von ringförmigen Dichtungssegmenten (120) einen distalen Endabschnitt (121) umfasst, wobei, wenn das Schmiermittelrückhaltesystem (100) an dem Windturbinenblatt (7) montiert ist, sich der distale Endabschnitt (121) in Richtung zu der zweiten Lagerkomponente (37) erstreckt, um eine Kammer (101) zum Zurückhalten von Schmiermittel von dem Pitchlager (31) zu definieren; und
wobei die Vielzahl von ringförmigen Dichtungssegmenten (120) ein lösbares ringförmiges Dichtungssegment umfasst, das lösbar mit einem anderen der ringförmigen Dichtungssegmente der Vielzahl von ringförmigen Dichtungssegmenten (120) verbunden ist.

2. Das Schmiermittelrückhaltesystem (100) nach Anspruch 1, wobei das lösbare ringförmige Dichtungssegment mit der Basis (110) lösbar zu verbinden ist.

3. Das Schmiermittelrückhaltesystem (100) nach einem der Ansprüche 1 bis 2, wobei sich der distale Endabschnitt (121) der ringförmigen Dichtungssegmente (120) ferner entlang eines Abschnitts einer Seitenfläche (43) des zweiten Lagerbauteils (37) erstreckt, wenn das Schmiermittelrückhaltesystem (100) an dem Windturbinenblatt (7) montiert ist.

4. Das Schmiermittelrückhaltesystem (100) nach einem der Ansprüche 1 bis 3, wobei die Vielzahl von ringförmigen Dichtungssegmenten (120) ein Rückhalteelement (150) umfasst, das mit dem distalen Endabschnitt (121) verbunden ist, um einen Spalt zwischen dem distalen Endabschnitt (121) und dem zweiten Lager (37) zu reduzieren, wenn das Schmiermittelrückhaltesystem (100) an dem Windturbinenblatt (7) montiert ist.

5. Das Schmiermittelrückhaltesystem (100) nach Anspruch 4, wobei das Rückhalteelement (150) lösbar mit dem distalen Endabschnitt (121) der Vielzahl von ringförmigen Dichtungssegmenten (120) verbunden ist.

6. Das Schmiermittelrückhaltesystem (100) nach einem der Ansprüche 4 bis 5, wobei das Rückhalteelement (150) eine Bürste mit einer Vielzahl von Borsten umfasst.

7. Das Schmiermittelrückhaltesystem (100) nach einem der Ansprüche 4 bis 6, wobei sich das Rückhalteelement (150) von dem distalen Endabschnitt (121) der Vielzahl von ringförmigen Dichtungssegmenten (120) bis zu einer Rückhalteelementspitze (151) in einer radialen Richtung (201) nach innen erstreckt.

8. Das Schmiermittelrückhaltesystem (100) nach einem der Ansprüche 1 bis 7, wobei die Vielzahl von ringförmigen Dichtungssegmenten (120) Folgendes umfasst:
einen proximalen Endabschnitt (122), der mit der Basis (110) zu verbinden ist und sich im Wesentlichen parallel zu der Basis (110) erstreckt; wobei der proximale Endabschnitt (122) einen Durchmesser des proximalen Endabschnitts definiert; und
einen zentralen Abschnitt (123), der den proximalen Endabschnitt (122) mit dem distalen Endabschnitt (121) verbindet.

9. Das Schmiermittelrückhaltesystem (100) nach Anspruch 8, wobei der distale Endabschnitt (121) einen Durchmesser des distalen Endabschnitts definiert und wobei der Durchmesser des distalen Endabschnitts größer als der Durchmesser des proximalen Endabschnitts ist.

10. Das Schmiermittelrückhaltesystem (100) nach einem der Ansprüche 1 bis 9, wobei die Vielzahl von ringförmigen Dichtungssegmenten (120) einen gestuften Randabschnitt (161) und einen flachen Randabschnitt (162) umfasst, wobei der gestufte Randabschnitt (161) eines ringförmigen Dichtungssegments einer Vielzahl von ringförmigen Dichtungssegmenten (120) den flachen Randabschnitt (162) eines benachbarten ringförmigen Dichtungssegments der Vielzahl von ringförmigen Dichtungssegmenten (120) zu überlappen ist.

11. Das Schmiermittelrückhaltesystem (100) nach einem der Ansprüche 1 bis 10, wobei die Vielzahl von ringförmigen Dichtungssegmenten (120) lösbare ringförmige Dichtungssegmente sind.

12. Das Schmiermittelrückhaltesystem (100) nach einem der Ansprüche 1 bis 11, wobei die Vielzahl von ringförmigen Dichtungssegmenten (120) ein Kunststoffmaterial umfasst.

13. Ein Windturbinenblatt (7) umfassend ein Schmiermittelrückhaltesystem (100) nach einem der Ansprüche 1 - 12.

14. Das Windturbinenblatt (7) von Anspruch 13, umfassend:
eine Blattschale (73), die eine innere Blattschalenfläche (74) und eine äußere Blattschalenfläche (75) umfasst;
einen Blattwurzelbefestigungsabschnitt (55), um einen Blattwurzelabschnitt (50) an einem ersten Lagerbauteil (36) eines Pitchlagers (31) zu befestigen;
wobei die Basis (110) des Schmiermittelrückhaltesystems (100) an die Blattschale (73) und/oder den Blattwurzelbefestigungsabschnitt (55) gekoppelt ist.

15. Ein Verfahren (300) zum Montieren eines Schmiermittelrückhaltesystems (100) für ein Pitchlager (31) in einem Windturbinenblatt (7), wobei das Pitchlager (31) ein erstes Lagerbauteil (36) und ein zweites Lagerbauteil (37) umfasst, wobei das erste Lagerbauteil (36) in Bezug auf das zweite Lagerbauteil (37) zu drehen ist, wobei das Verfahren (300) Folgendes umfasst:
verbinden (310) einer Basis (110) des Schmiermittelrückhaltesystems (100) mit einem Blattwurzelabschnitt (50) des Windturbinenblatts (7), der dazu konfiguriert ist, an das erste Lagerbauteil (36) gekoppelt zu sein;
verbinden (320) einer Vielzahl von ringförmigen Dichtungssegmenten (120) mit der Basis (110) auf solche Weise, dass sich ein distaler Endabschnitt (121) der Vielzahl von ringförmigen Dichtungssegmenten (120) in Richtung des zweiten Lagerbauteils (37) erstreckt, um eine Kammer (101) zum Zurückhalten von Schmiermittel aus dem Pitchlager (31) zu definieren; und
verbinden (330) der Vielzahl von ringförmigen Dichtungssegmenten (120) miteinander, um eine ringförmige Dichtungsbaugruppe (200) zu bilden; wobei das Verbinden (300) der Vielzahl von ringförmigen Dichtungssegmenten (120) das lösbare Verbinden eines lösbaren ringförmigen Dichtungssegments der Vielzahl von ringförmigen Dichtungssegmenten (120) mit einem anderen der ringförmigen Dichtungssegmente der Vielzahl von ringförmigen Dichtungssegmenten (120) umfasst.

## Revendications

1. Un système de rétention de lubrifiant (100) pour un palier de régulation de pas (31) d'une éolienne, dans lequel le palier de régulation de pas (31) comprend un premier composant de palier (36) à coupler à une pale d'éolienne (7) et un second composant de palier (37) à coupler à un moyeu de rotor (6) d'une éolienne, le premier composant de palier (36) pouvant tourner par rapport au second composant de palier (37) ; le système de rétention de lubrifiant (100) comprenant :
une base (110) à connecter à une pale d'éolienne (7), la base (110) comprenant une surface extérieure de base destinée à s'adapter à une surface de la pale d'éolienne (7) ;
une pluralité de segments de joint annulaires (120) à connecter à la base (110), dans lequel les segments de joint annulaires de la pluralité de segments de joint annulaires (120) doivent être connectés les uns aux autres pour former un ensemble de joint annulaire (200) ;
dans lequel la pluralité de segments de joint annulaires (120) comprend une partie d'extrémité distale (121), dans lequel lorsque le système de rétention de lubrifiant (100) est monté sur la pale d'éolienne (7), la partie d'extrémité distale (121) s'étend vers le second composant de palier (37) pour définir une chambre (101) pour retenir le lubrifiant du palier de régulation de pas (31) ; et
dans lequel la pluralité de segments de joint annulaires (120) comprend un segment de joint annulaire libérable destiné à être connecté de manière libérable à un autre des segments de joint annulaires de la pluralité de segments de joint annulaires (120).

2. Le système de rétention de lubrifiant (100) selon la revendication 1, dans lequel le segment de joint annulaire est destiné à être connecté de manière libérable à la base (110).

3. Le système de rétention de lubrifiant (100) selon l'une quelconque des revendications 1 à 2, dans lequel la partie d'extrémité distale (121) des segments de joint annulaires (120) s'étend en outre le long d'une partie d'une surface latérale (43) du second composant de palier (37) lorsque le système de rétention de lubrifiant (100) est monté sur la pale d'éolienne (7).

4. Le système de rétention de lubrifiant (100) selon l'une quelconque des revendications 1 à 3, dans lequel la pluralité de segments de joint annulaires (120) comprend un élément de rétention (150) connecté à la partie d'extrémité distale (121) pour réduire un espace entre la partie d'extrémité distale (121) et le second palier (37) lorsque le système de rétention de lubrifiant (100) est monté sur la pale d'éolienne (7).

5. Le système de rétention de lubrifiant (100) selon la revendication 4, dans lequel l'élément de rétention (150) est connecté de manière amovible à la partie d'extrémité distale (121) de la pluralité de segments de joint annulaires (120).

6. Le système de rétention de lubrifiant (100) selon l'une quelconque des revendications 4 à 5, dans lequel l'élément de rétention (150) comprend une brosse ayant une pluralité de poils.

7. Le système de rétention de lubrifiant (100) selon l'une quelconque des revendications 4 à 6, dans lequel l'élément de rétention (150) s'étend de la partie d'extrémité distale (121) de la pluralité de segments de joint annulaires (120) jusqu'à une pointe de l'élément de rétention (151) vers l'intérieur dans une direction radiale (201).

8. Le système de rétention de lubrifiant (100) selon l'une quelconque des revendications 1 à 7, dans lequel la pluralité de segments de joint annulaires (120) comprend :
une partie d'extrémité proximale (122) destinée à être connectée à la base (110) et s'étendant essentiellement en parallèle à la base (110) ; la partie d'extrémité proximale (122) définissant un diamètre de partie d'extrémité proximale ; et
une partie centrale (123) reliant la partie d'extrémité proximale (122) à la partie d'extrémité distale (121).

9. Le système de rétention de lubrifiant (100) selon la revendication 8, dans lequel la partie d'extrémité distale (121) définit un diamètre de partie d'extrémité distale et dans lequel le diamètre de partie d'extrémité distale est supérieur au diamètre de partie d'extrémité proximale.

10. Le système de rétention de lubrifiant (100) selon l'une quelconque des revendications 1 à 9, dans lequel la pluralité de segments de joint annulaires (120) comprend une partie de bord étagée (161) et une partie de bord plate (162), dans lequel la partie de bord étagée (161) d'un segment de joint annulaire d'une pluralité de segments de joint annulaires (120) est destinée à chevaucher la partie de bord plate (162) d'un segment de joint annulaire adjacent de la pluralité de segments de joint annulaires (120).

11. Le système de rétention de lubrifiant (100) selon l'une quelconque des revendications 1 à 10, dans lequel la pluralité de segments de joint annulaires (120) sont des segments de joint annulaires libérables.

12. Le système de rétention de lubrifiant (100) selon l'une quelconque des revendications 1 à 11, dans lequel la pluralité de segments de joint annulaires (120) comprend un matériau plastique.

13. Une pale d'éolienne (7) comprenant un système de rétention de lubrifiant (100) selon l'une quelconque des revendications 1 - 12.

14. La pale d'éolienne (7) de la revendication 13 comprenant :
une coque de pale (73) comprenant une surface de coque de pale intérieure (74) et une surface de coque de pale extérieure (75) ;
une partie de fixation de pied de pale (55) pour fixer une partie de pied de pale (50) à un premier composant de palier (36) d'un palier de régulation de pas (31) ;
dans lequel la base (110) du système de rétention de lubrifiant (100) est couplée à la coque de pale (73) et/ou à la partie de fixation de pied de pale (55).

15. Un procédé (300) pour monter un système de rétention de lubrifiant (100) pour un palier de régulation de pas (31) dans une pale d'éolienne (7), dans lequel le palier de régulation de pas (31) comprend un premier composant de palier (36) et un second composant de palier (37), le premier composant de palier (36) est destiné à tourner par rapport au second composant de palier (37), le procédé (300) comprenant :
connecter (310) une base (110) du système de rétention de lubrifiant (100) à une partie de pied de pale (50) de la pale d'éolienne (7) configurée pour être couplée au premier composant de palier (36) ;
connecter (320) une pluralité de segments de joint annulaires (120) à la base (110) de manière à ce qu'une partie d'extrémité distale (121) de la pluralité de segments de joint annulaires (120) s'étende vers le second composant de palier (37) pour définir une chambre (101) pour retenir le lubrifiant provenant du palier de régulation de pas (31) ; et
connecter (330) la pluralité de segments de joint annulaires (120) les uns aux autres pour former un ensemble de joint annulaire (200) ; dans lequel la connexion (300) de la pluralité de segments de joint annulaires (120) comprend la connexion libérable d'un segment de joint annulaire libérable de la pluralité de segments de joint annulaires (120) à un autre des segments de joint annulaires de la pluralité de segments de joint annulaires (120).
